(19) Europäisches Patentamt
European Patent Office
Office européen des brevets

(11) Publication number: 0 041 848
B1

(12) # EUROPEAN PATENT SPECIFICATION

(45) Date of publication of patent specification: 22.08.84

(51) Int. Cl.$^3$: **C 08 G 12/40,** C 08 G 12/42, C 07 D 251/64, C 09 D 3/52, C 08 L 67/08

(21) Application number: 81302510.3

(22) Date of filing: 05.06.81

(54) **Unsaturated melamine condensates and high solids coating compositions thereof and a process for preparing such condensates.**

(30) Priority: **09.06.80 US 157720**
**09.06.80 US 157929**

(43) Date of publication of application:
**16.12.81 Bulletin 81/50**

(45) Publication of the grant of the patent:
**22.08.84 Bulletin 84/34**

(84) Designated Contracting States:
**BE DE FR GB IT NL**

(56) References cited:
**DE-A-2 158 821**
**DE-A-2 846 479**
**GB-A-1 106 050**

**Chemical Abstracts vol. 81, no. 20 18 November 1974 Columbus, Ohio, USA H. MASUDA et al. "Electron beam-hardenable resin compositions" page 152, abstract no. 123028v**

(73) Proprietor: **MONSANTO COMPANY**
**Patent Department 800 North Lindbergh Boulevard**
**St. Louis, Missouri 63166 (US)**

(72) Inventor: **Strazik, William Francis**
**7 Blacksmith Road**
**Wilbraham Massachusetts 01095 (US)**
Inventor: **Le Blanc, John Roger**
**34 Decorie Drive**
**Wilbraham Massachusetts 01095 (US)**
Inventor: **Santer, James Owen**
**15 Pleasant Place**
**East Longmeadow Massachusetts 01028 (US)**

(74) Representative: **Pearson, John Lionel et al**
**Monsanto Europe S.A. Avenue de Tervuren**
**270-272 Letter Box No 1**
**B-1150 Brussels (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 041 848 B1

**Description**

This invention relates to unsaturated melamine condensates obtained from condensation of a methylolmelamine, an acrylamide, an unsaturated fatty acid amide and optionally a lower alcohol, to a process for the preparation of such condensates, to compositions thereof with an unsaturated oil-modified resin of moderate molecular weight and to articles coated therewith. More particularly it is directed to condensates of a methylolmelamine containing at least five methylol groups per melamine ring, acrylamide, an unsaturated fatty acid amide and optionally a $C_1$ to $C_{10}$ alcohol, a process for the preparation of such condensates, compositions thereof and articles coated with such compositions.

Recent anti-pollution legislation is causing the coatings industry to develop coating compositions high in solids in order to reduce solvent emission upon application and drying of the compositions. Alkyd manufacturers have tried to increase the solids/viscosity ratio of their products by reducing the molecular weight of the alkyd. While this approach has been successful in raising the solids of air dry alkyd paints, it has produced some undesirable side effects in the resulting coatings; namely, lower hardness, solvent resistance and water resistance, and longer tack free and cure times. The use of conventional aminoplast crosslinkers fails to improve these properties in air dry alkyd coatings.

The present invention provides unsaturated melamine condensates, which are useful as crosslinkers of unsaturated oil-modified resins such as those used in high solids alkyd coatings, and coating compositions comprising from 5 to 50 parts of an unsaturated melamine condensate and from 50 to 95 parts by weight of an unsaturated oil-modified resin, allowing them to be air-dried more rapidly to hard, solvent and water resistant coatings. The unsaturated melamine condensates are condensates of a methylolmelamine with an acrylamide, an unsaturated fatty acid amide and optionally a $C_1$ to $C_{10}$ alcohol wherein the methylolmelamine has at least five methylol groups per melamine ring, wherein substantially all the methylol groups are condensed with acrylamide, unsaturated fatty acid amide or alcohol, wherein the number of acrylamide moieties of the condensate is in the range of 1 to 4 per melamine ring and the number of unsaturated fatty acid amide moieties is in the range of 0.5 to 2 per melamine ring and wherein the ratio of acrylamide moieties to unsaturated fatty acid amide moieties is in the range of 1:1 to 3:1, and wherein the unsaturated fatty acid amide is an amide of ammonia or methylamine and an ethylenically unsaturated fatty acid containing from 4 to 32 carbon atoms and at least one allylic hydrogen atom per fatty acid moiety. Another aspect of the invention is directed to a process for the preparation of the condensates which comprises reacting an acrylamide and an unsaturated fatty acid amide with an alkoxymethylmelamine at a temperature below 120°C in the presence of an acid catalyst until an amount of alcohol about equivalent to the acrylamide and the unsaturated fatty acid amide is evolved. Still another aspect is directed to articles coated with a coating composition comprising an unsaturated oil-modified resin and an unsaturated melamine concentrate.

The alkoxymethylmelamine is a methylolated, etherified melamine obtained by reaction of formaldehyde and melamine under conditions well known in the art to minimize the amount of oligomerization which can occur when methylene or methylene ether bridges are formed by inter-condensation of methylol groups, followed by etherification with an alcohol or mixture of alcohols. The combined ratio of formaldehyde to melamine in the alkoxymethyl melamine is in the range of 5:1 to 6:1 and the combined ratio of the etherifying alcohol is in the range of 4.7 to 6.0 moles per mole melamine. The etherifying alcohol is preferably selected from the group consisting of methyl, ethyl, propyl, isopropyl, butyl and isobutyl alcohols, and mixtures thereof and mixtures with higher alcohols containing up to 10 carbon atoms. However the amount of $C_1$ to $C_4$ alkoxy groups is preferably at least stoichiometric with the acrylamide and ethylenically unsaturated fatty acid amide condensing agents to allow ready displacement of alkoxy by the amide groups. The preferred etherifying alcohol is methyl alcohol because its volatility and low boiling point allow its more ready displacement from the alkoxymethylmelamine. The average degree of oligomerization of the alkoxymethylamine is about 3 or less and is preferably less than 2.

Alternatively the unsaturated condensate of the present invention can be obtained by condensation of a methylolmelamine with the appropriate amount of the acrylamide, the ethylenically unsaturated fatty acid amide and a $C_1$ to $C_{10}$ alcohol to obtain the desired condensate ratio. The methylolmelamine preferably contains at least five methylol groups per melamine ring and is obtained by reaction of formaldehyde and melamine under conditions well known in the art to minimize the amount of oligomerization which can occur by formation of methylene or methylene ether bridges. The average degree of oligomerization is preferably less than 2 and preferably the methylolmelamine is the substantially fully methylolated melamine with a degree of methylolation of about 6. "Substantially all the methylol groups" are considered to have been condensed with the acrylamide, the unsaturated fatty acid amide and the alcohol when at least 80 percent and preferably at least 90 percent have been condensed therewith. When the alcohol is a $C_1$ to $C_4$ alcohol, it can be added in excess to help reduce the tendency of the methylolmelamine to self-condense. The excess can be distilled when the condensation with amides and alcohol is complete. Because of its greater volatility, methyl alcohol is the preferred alcohol. When the desired alkoxymethyl groups are derived from a higher alcohol, a $C_1$ to $C_4$ alcohol may be used as solvent for the reaction and is stripped from the reaction mixture when the amide condensation is complete, allowing the desired product to be recovered. Instead of a lower

alcohol, any inert, low boiling solvent for the reactants and the reaction product may be used as the reaction solvent. Preferably the boiling point of the solvent is 150°C or less and more preferably it is 100°C or less.

The acrylamide which is used in the condensation can be represented by the formula:

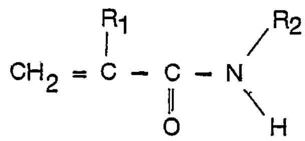

where $R_1$ and $R_2$ are H or methyl. The preferred acrylamide is acrylamide in which $R_1$ and $R_2$ are both hydrogen.

The ethylenically unsaturated fatty acid amide is an amide of ammonia or methylamine and a $C_4$ to $C_{32}$ ethylenically unsaturated fatty acid containing at least one allylic hydrogen atom i.e. at least one hydrogen atom bonded to a carbon adjacent to an ethylenic double bond. Preferably the amide is a primary amide obtained by reaction of ammonia and unsaturated fatty acid. The amide can be obtained by direct reaction of the ammonia or methylamine with the unsaturated fatty acid or by indirect reaction for example via the corresponding acid chloride, acid anhydride, ester or nitrile. The unsaturated fatty acids which may be used for preparation of the amides include mono-unsaturated fatty acids such as crotonic acid, 4-hexenoic acid, 6-octenoic acid, 4-decenoic acid, caproleic acid, 10-undecylenic acid, lauroleic acid, physeteric acid, myristoleic acid, palmitoleic acid, petroselinic acid, petroselaidic acid, oleic acid, elaidic acid, vaccenic acid, gadoleic acid, cetoleic acid, erucic acid, brassidic acid, selacholeic acid, ximinic acid and lumequoic acid, and polyunsaturated fatty acids such as sorbic acid, linoleic acid, linolelaidic acid, hiragonic acid, $\alpha$-eleosteartic acid, $\beta$-eleostearic acid, punicic acid, linolenic acid, elaidolinolenic acid, pseudoeleostearic acid, moroctic acid, $\alpha$-parinaric acid, $\beta$-parinaric acid, arachidonic acid, elupanodonic acid, and nisinic acid. Preferably at least 5 weight percent of the acid is a polyunsaturated acid and more preferably at least 10 weight percent is polyunsaturated. Preferably the unsaturated fatty acid contain 10 to 20 carbon atoms and is of the group which occurs in natural glyceride oils. Among the preferred acids are oleic acid, linoleic acid and linolenic acid and mixtures thereof.

The ratio of acrylamide moieties to ethylenically unsaturated fatty acid amide moieties in the unsaturated melamine condensate is preferably in the range of 1:1 to 3:1 so that when the unsaturated melamine condensate is incorporated into unsaturated alkyds it can reduce the viscosity of the system without substantially increasing the time required by the system to reach a tack-free state when it is allowed to dry in air. In general the unsaturated fatty acid amide moieties promote a reduction in viscosity of the system, the acrylamide moieties enhance the hardness of the air-dried coating and the acrylamide and unsaturated fatty acid amide moieties together enhance the rate of cure of the system. Preferably the number of acrylamide moieties per melamine ring is in the range of 1 to 4 and the number of ethylenically unsaturated fatty acid amide moieties is in the range of 0.5 to 2. More preferably the number of acrylamide moieties is in the range of 1 to 3 and the number of ethylenically unsaturated fatty acid amide moieties is in the range of 0.75 to 1.5 per melamine ring, the remaining methylol groups being substantially condensed with the $C_1$ to $C_{10}$ alcohol forming alkoxymethyl groups.

In the condensation reaction of the melamine derivative and the amides, the temperature is maintained below about 120°C to minimize polymerization reactions and in the initial stage of the reaction the temperature is preferably maintained below about 80°C and atmospheric pressure is maintained to prohibit the removal of reactants before they have reacted. As the reaction proceeds, the volatile products generated by the condensation reaction such as water or lower alcohol are removed under reduced pressure and increased temperature.

The condensation reaction is carried out in the presence of a catalytic amount of an acid catalyst selected from the group consisting of protonic acids of pKa less than 2 and Lewis acids. A catalytic amount is an amount which allows the reaction to be completed within a reasonable time, usually less than 24 hours at a selected temperature. The catalyst is generally added in an amount of from 0.1 to 5 weight percent, preferably from 0.5 to 2 weight percent of the reaction mixture. The protonic acids can be selected from the mineral acids hydrochloric, nitric and sulfuric acids, organic acids such as oxalic acid, trichloroacetic acid and trifluoracetic acid, and sulfonic acids such as methanesulfonic acid, trifluoromethanesulfonic acid, benzenesulfonic acid and p-toluenesulfonic acid. The sulfonic acids are generally preferred since they are strong acids, readily soluble in the reaction medium and can be readily added without the addition of water. The Lewis acids can be selected from the group consisting of metal halides such as stannic chloride, aluminum chloride, ferric chloride and magnesium bromide, metal alkoxides such as aluminum isopropoxide, tetrapropyl titanate, tetrabutyl zirconate, and dipropyl diacetonyl titanate, metal salts of organic acids such as stannous octoate, stannic octoate and dibutyltin diacetate, boron compounds such as boron trichloride, boron trifluoride and boron trifluoride etherate and acid phosphates such as alkyl acid phosphates including methyl acid phosphate, butyl acid

phosphate and phenyl acid phosphate. For high conversion, boron trifluoride, aluminum chloride, stannic chloride, and butyl acid phosphate are among the preferred Lewis acids.

To prevent polymerization or oxidation of the unsaturated melamine condensate, the acrylamide or the unsaturated fatty acid amide during the condensation reaction, a polymerization and oxidation inhibiting quantity of an inhibitor is added to the reaction mixture. Excess of inhibitor should be avoided since it can subsequently inhibit the polymerization of air-drying unsaturated oil-modified resins containing the unsaturated melamine condensate of the present invention, causing an excessively long induction period when the compositions are air-dried. Effective inhibitors include hydroquinone, ethers of hydroquinone, and quinone.

The unsaturated melamine condensates can be used with unsaturated vehicles to reduce the viscosity of coating systems containing such vehicles, and to improve the drying properties and hardness of the coatings. The condensates are especially useful with air-drying unsaturated or oil-modified resins of molecular weight about 10,000 or less and glass transition temperature in the range of 0 to 100°C having an oil length in the range of 15 to 50%. The oil modified resins can be oil modified alkyd resins prepared from conventional polybasic acids, polyhydric alcohols and oil-modifying fatty acids, or oil-modified styrene allyl alcohol copolymers prepared by esterification of styrene allyl alcohol copolymers containing from about 2 to about 10 hydroxy groups per molecule with oil modifying fatty acid, or oil modified acrylic resins prepared by esterification of oil modifying fatty acid and low molecular weight hydroxy containing acrylic copolymers of glass transition temperature of about 25°C or higher prepared by interpolymerization of $C_4$ to $C_{10}$ alkyl acrylates or $C_5$ to $C_{11}$ alkyl methacrylates with a hydroxy monomer selected from the group consisting of allyl alcohol, methallyl alcohol, and $C_5$ to $C_8$ hydroxy acrylates or hydroxy methacrylates such as 2-hydroxyethyl acrylate and 2-hydroxyethyl methacrylate, or oil-modifed epoxy resins prepared by reaction of an oil-modifying fatty acid with an epoxy resin condensate of the diglycidyl ether of bisphenol A or an epoxidized polybutadiene. Preferred oil-modified resins are of molecular weight in the range of 500 to 8000, and glass transition temperature in the range of 20 to 60°C and contain an oil modifying fatty acid comprising at least 10 percent by weight of a polyunsaturated fatty acid such as sorbic acid, linoleic acid, linolelaidic acid, hiragonic acid, $\alpha$-eleostearic acid, $\beta$-eleostearic acid, punicic acid, linolenic acid, elaidolinolenic acid, pseudoeleostearic acid, moroctic acid, $\alpha$-parinaric acid, $\beta$-parinaric acid, arachidonic acid, elupanodonic acid, and nisinic acid. More preferably when the unsaturated melamine condensate is low in polyunsaturate content, the polyunsaturated fatty acid content of the oil-modified resin is preferably at least 30 percent by weight and even more preferably, it is at least 50 percent by weight of the oil modifying fatty acid. Accordingly, the preferred oil-modifying fatty acids are fatty acids separated from drying oils or semi-drying oils such as dehydrated castor oil fatty acid (a linoleic acid content of 76 to 88%), linseed oil fatty acid (a linoleic acid content of 15% and a linolenic acid content of 52%) and safflower oil fatty acid (a linoleic acid content of 72 to 80%) as well as linoleic acid, linolenic acid and a mixture of both. In the preparation of the oil-modified resins it is generally desirable to add a sufficient amount of a polymerization inhibitor such as hydroquinone to inhibit gelation during the oil modification.

Unsaturated oil modified resin compositions in combination with the unsaturated melamine condensates can contain from 50 to 95 parts by weight of the unsaturated oil-modified resin and from 50 to 5 parts by weight of the unsaturated melamine condensate. Preferably the combination contains from 70 to 90 parts by weight of the unsaturated oil-modified resin and from 30 to 10 parts by weight of unsaturated melamine condensate. Too high levels of the unsaturated melamine condensate can cause longer times to reach a tack-free condition and deterioration of properties such as flexibility in the cured coating especially when the condensate contains high levels of acrylamide. When the level is too low no appreciable effect on the viscosity of the coating composition and the hardness and solvent resistance of the coating is obtained.

The air-drying compositions of the present invention comprising unsaturated alkyds and unsaturated melamine condensates may be formulated in any of the conventional solvents for such system including aromatic hydrocarbons, aliphatic esters, and aliphatic ketones and mixtures thereof and mixtures containing aliphatic hydrocarbons. The solutions can be used at any dilution which is convenient for application of the coating compositions to a substrate. Preferably the solids of the coating compositions are greater than 40 weight percent and even more preferably 70 percent or greater since advantage can be taken of the ability of the unsaturated melamine condensate to reduce the viscosity of higher molecular weight unsaturated oil-modified resin.

The air-drying compositions containing unsaturated oil-modified resins and the unsaturated melamine condensates may be cured at room temperature by means of metal driers of heavy metals such as cobalt, manganese and zinc salts of naphthenic acid, neodecanoic acid and the like or by means of such metal driers in combination with the alkali metal salts of these acids. When the coating compositions are used as room-temperature drying paints, they are suitable for painting outdoor structures, and heavy machinery and equipment too bulky to be passed through drying ovens.

The unsaturated air-drying compositions may also be force-dried and cured at elevated temperatures of up to about 100°C and more and such cure may be accelerated by conventional free

radical catalysts such as peroxides and hydroperoxides and by redox systems such as benzoyl peroxide and dimethylaniline.

The coating compositions can be modified by the addition of pigments, plasticizers, colorants, dyes, pigment dispersing agents, flow control agents and stabilizers.

Other types of unsaturated vehicles which may be usefully combined with the unsaturated melamine condensates are polyesters containing internal unsaturation derived from maleic acid moieties and the like and pendant unsaturation provided by allylic or acrylic groups. Such polyester compositions are conveniently cured by free radical methods at elevated temperatures, and can include significant amounts of vinyl monomers such as acrylates, methacrylates and aromatic vinyl monomers such as styrene.

The following examples are set forth in illustration of the invention and should not be construed as a limitation thereof. Unless otherwise indicated, all parts and percentages are by weight.

Example 1

This example describes the preparation of an unsaturated melamine condensate containing 2 acrylamide units and 1 ethylenically unsaturated fatty acid amide unit and 3 methoxy units per melamine ring.

To a kettle equipped with stirrer, thermometer, heating jacket and a vacuum outlet are charged the following:

337 parts hexamethoxymethylmelamine
150 parts acrylamide
292 parts of a mixture of 94% oleylamide and 6% linoleylamide
1.62 parts methanesulfonic acid
0.30 parts hydroquinone (0.2% by wt. on acrylamide)
0.15 parts quinone (0.1% by wt. on acrylamide)

The mixture is stirred under a nitrogen blanket and the temperature is increased to 80°C to form a clear solution. At 80°C, a slight vacuum is applied. The temperature is gradually increased to 110°C and the pressure is gradually decreased to 100 mm mercury over a 90 minute period to distil methanol formed by the condensation of the amides with the hexamethoxymethylmelamine. The product analyzed by thin layer chromatography contains less than 0.2% free acrylamide or fatty amide and practically no polymeric material. The product is diluted to 77 percent solids with methyl ethyl ketone and the solution is neutralized with 0.95 ml aqueous sodium hydroxide (50 wt.% solution). The neutralized product is filtered to remove precipitated salt. The viscosity of the solution is 1 Pa.s (1000 cps) at 25°C.

Examples 1—15

By the procedure of example 1, the following examples of unsaturated melamine condensates are prepared from hexamethoxymethylmelamine.

TABLE 1

Unsaturated Melamine Condensates

| Example | Acrylamide groups per melamine ring | Fatty Acid Amide groups per melamine ring | Fatty acid amide |
|---|---|---|---|
| 1 | 2 | 1 | 94% oleylamide<br>6% linoleylamide |
| 2 | 2 | 1 | 84% oleylamide<br>16% Linoleylamide |
| 3 | 2 | 0.75 | oleylamide |
| 4 | 2 | 1 | oleylamide |
| 5 | 2.5 | 1.5 | oleylamide |
| 6 | 3.5 | 2 | oleylamide |
| 7 | 1.5 | 0.75 | oleylamide |
| 8 | 2 | 1.5 | oleylamide |
| 9 | 1.5 | 1.5 | oleylamide |
| 10a | 2 | 0.75 | oleylamide |
| 11b | 2 | 1 | oleylamide |
| 13 | 2 | 0 | – |
| 14 | 1.0 | 0.5 | 84% oleylamide<br>16% linoleylamide |
| 15 | 2 | 1 | stearamide |
| 16 | 0.75 | 0.25 | 84% oleylamide<br>16% linoleylamide |

a prepared from a methoxy/butoxy methylmelamine

b condensation catalyzed with butyl acid phosphate

Example 1A

An air-drying curable resin composition is prepared by blending a 60 percent xylene solution of an oil modified unsaturated resin of molecular weight 6000 and oil length 35 with the unsaturated melamine condensate of example 1, cobalt neodecanoate and manganese octoate to obtain a 60 percent solids solution containing 48 weight percent oil modified unsaturated resin, 12 weight percent unsaturated melamine condensate, 0.07 weight percent cobalt neodecanoate and 0.035 weight percent of manganese octoate in a solvent blend containing xylene and methyl ethyl ketone in the weight ratio of 4:1. The viscosity of the solution is 354 mPa.s (cps). The coating solution is applied to phosphate treated steel panels and dried in air.

The following procedures are used to evaluate the coating composition:

Viscosity is determined by Brookfield Viscometer and Gardner-Holt Viscosity tube comparison at 25°C.

Formulation stability is determined by storing the formulations in clear Gardner-Holt viscosity tubes and/or in sealed 57 ml. jars (clear) at room temperature. The formulations are exposed to light and are tested periodically to determine any viscosity change.

Coating thicknesses on steel panels are determined by means of a GE thickness Gage Type B Model A 337AY2.

Tack free times are determined in two ways:

A) When the finger with a slight pressure will not leave a mark and the surface is not sticky to the touch.

B) A strip of aluminum foil approx. 19 mm x 76 mm, is smoothed and curled into a "C" shape by drawing the strip between a flat surface and a glass tube. One end of this curled foil strip is placed on the coating and held in place for 8 seconds with a 17 gram weight. If the foil rolls over when the weight is removed, the coating is judged tack free.

Coating hardness is determined by the standard pencil hardness testing procedure (ASTM D3363—74).

Solvent Resistance is determined by rubbing a felt tipped marker, the tip of which is saturated with methyl ethyl ketone, over the cured coating and determining the number of rubs necessary to penetrate or dissolve the coating, exposing the bare metal substrate. A single rub constitutes moving the MEK saturated marker across the coating and back over the same path to the starting point.

Cleveland Condensing Humidity Test is carried out according to ASTM D—2247—68 using a Cleveland Condensing Humidity Cabinet.

Coating flexibility is determined by means of the Gardner Falling Dart Impact Tester (failure is considered to have occurred if the coating shows any sign of cracking or crazing) and by the conical mandrel test (the angle at which the first crack appear is noted).

Durability is determined by exposing coatings on steel substrates to the weatherability cycle of the QUV Accelerated Weathering Tester (Q-Panel Company). Each cycle consists of 8 hours of condensation at 60°C followed by 16 hours of ultraviolet at 65°C.

Data from the evaluation of Example 1A are presented in Table 2.

*Air-drying Unsaturated Coating Compositions — A-Series*

Air-drying compositions similar to example 1A and designated 2A, 3A, 5A, 6A, 14A, 15A and 16A are prepared from the unsaturated melamine condensates of examples 2, 3, 5, 6, 14, 15 and 16 to provide a series of coating compositions containing unsaturated oil-modified resin and unsaturated melamine condensate in the weight ratio of 80 parts to 20 parts. Data for the evaluation of the coating compositions are presented in Table 2 along with data for Example 0A comprising the unsaturated resin without the unsaturated melamine condensate. The data show that the mixed unsaturates i.e. the melamine condensates containing both unsaturated fatty acid amide and acrylamide units cause significant decrease in viscosity of the coating systems and that the degree of improvement in other coating properties such as tack free time, hardness, rate of hardness development, solvent resistance, rate of solvent resistance development and water resistance depend on the actual amounts of the unsaturate fatty acid amide and acrylamide units present in the melamine condensate. In general, unsaturated melamine condensates containing a high acrylamide to fatty amide ratio are somewhat less compatible with the unsaturated oil-modified resin and in coating compositions containing the unsaturated oil-modified resins, the viscosity tends to be higher and the tack free time is reduced and the air dried coatings obtained from the coating compositions are more solvent resistant and somewhat less flexible. The total amount of amido-substitution has a lesser effect than the amide ratio on the properties of the coating compositions and air dried coatings. However, with increase in the total amido substitution there is a tendency towards decreased compatibility with the unsaturated oil-modified resin, decreased coating flexibility and condensing humidity resistance, and increased solvent resistance. In contrast, a saturated fatty amide (example 15) incorporated into the melamine condensate reduces compatibility and increased viscosity of the coating system, decreases adhesion and gloss and makes no contribution to solvent resistance of the air-dried coating.

TABLE 2

Evaluation of Air-drying Unsaturated Compositions A Series

| Coating Composition | 0A | 1A | 2A | 3A | 5A | 6A | 13A | 14 | 15A | 16A |
|---|---|---|---|---|---|---|---|---|---|---|
| Formulation Properties | | | | | | | | | | |
| Appearance | Clear | Clear | Clear | v. sl. haze | sl. haze | v. sl. haze | sl. hazy | clear | hazy | clear |
| Viscosity @25°C, mPa.s (cps) initial, 60% solids | 500 | 354 | 327 | 442 | 381 | — | — | 300 | — | 290 |
| 70% solids | — | 2500 | 2400 | — | — | 2500 | 2300 | — | 5500 | — |
| Viscosity @25°C, mPa.s (cps) 1 week @120°F, 60% solids | 516 | 417 | 410 | 486 | — | — | — | 350 | — | 345 |
| % Visc, rise after 1 wk. @120°F | 3% | 18% | 25% | 10% | — | — | — | 17% | — | 19% |
| Gardner Color (w/o driers) | 6 | 6 | 6 | 5 | — | — | — | — | — | — |
| Coating Properties | | | | | | | | | | |
| Appearance | clear high gloss | clear high gloss | clear high gloss | clear high gloss | v. sl. haze high gloss | v. sl. haze high gloss | sl. hazy | clear high gloss | hazy mod. gloss | clear high gloss |
| Tack free time (min.) | 40/50 | 35/45 | 35-40 | 20/25 | 25/35 | 25/50 | 160/210 | 80/260 | 20/27 | 130/390 |
| Hardness @ 0.04 mm | | | | | | | | | | |
| after 1 day | 6B | 6B | 6B | <6B | <6B | 5B+ | <6B | <6B | 4B | <6B |
| after 3 days | 3B | B | B | B– | B | 2B | 2B | 2B– | 3B | 3B– |
| after 10 days | B– | B+ | B | B | B | B | B | 2B | 2B | 2B– |
| after 21 days | B– | B+ | B+ | B+ | B | B+ | HB– | — | 2B+ | — |

TABLE 2 (Continued)

Evaluation of Air-drying Unsaturated Compositions A Series

| Coating Composition | 0A | 1A | 2A | 3A | 5A | 6A | 13A | 14 | 15A | 16A |
|---|---|---|---|---|---|---|---|---|---|---|
| Coating Properties | | | | | | | | | | |
| MEK Resistance (rubs) | | | | | | | | | | |
| after 3 days | 32 | 40 | 37 | 30 | 33 | 30 | 45 | 22 | 26 | 24 |
| after 10 days | 45 | 90 | 80 | 85 | 125 | 70 | 75 | 45 | 41 | 45 |
| after 21 days | 50 | 95 | 85 | 85 | 120 | 95 | 95 | — | 45 | — |
| Forward Impact (Joules) | 2.3 | 1.9 | 1.9 | 1.9 | 1.9 | 1.9 | 1.1 | | 1.7 | |
| Conical Mandrel (1st crack) | 180° | 30° | 70° | 22° | 40° | 21° | — | | 17°(b) | |
| Clev. Cond. Humidity (a) | | | | | | | | | | |
| 21 days/2 days | Mod. #9B. R. over 75% | Few #10B PH.R. over 35% | Dense PH. B. PH.R. over 15% | Mod. #10B. PH.R. over 25% | Few. #9B. R. over 75% | Mod.— Dense #10B. R. over 70% | | | | |
| QUV Weatherometer (a) | | | | | | | | | | |
| 21 days/2 days | Dense PH. B PH.R. over 30% | Dense PH. B. PH.R. over 85% | Dense PH. B. PH.R. over 70% | Dense PH. B. PH.R. over 80% | Dense PH. B. PH.R. over 50% | Mod. #10B. PH.R. over 40% (c) | Dense B+ R over 100% | | | |

(a) First time is days of air dry before exposure, second time is exposure time; B = Blisters, PH. = pinhead, R. = rust

(b) very poor adhesion

(c) 12 days air dry; 2 days exposure in QUV.

*Air-drying Unsaturated Coating Composition — B Series*

Air-drying compositions of 70 percent solids and designated 3B, 4B and 7B are prepared from a solution of an unsaturated oil-modified resin of oil length 32% sold by Cargill under the tradename Alkyd 5700 and the unsaturated melamine condensates of examples 3, 4 and 7. The weight ratio of unsaturated oil-modified resin to unsaturated melamine condensate is 4:1. The compositions contain 0.07 percent cobalt neodecanoate and 0.04 percent manganese octoate based on the solids content. The compositions are coated on phosphate treated steel panels and allowed to dry at room temperature. The coatings are evaluated in comparison with a coating prepared from the unsaturated oil-modified resin alone (Example OB). The data are set forth in Table 3.

The data show that the unsaturated melamine condensates of examples 3 and 4 reduce the tack free time of the unsaturated oil-modified resin substantially without affecting the low viscosity of the resin solution. In examples 3B, 4B and 7B, the hardness, rate of hardness development and solvent resistance of the oil-modified resin are substantially improved by the unsaturated melamine condensate. As with the A series of coating compositions, the flexibility of the coatings decreased with increase in the ratio of acrylamide moieties to unsaturated fatty acid amide moieties in the unsaturated melamine condensate.

TABLE 3

Evaluation of Air-drying Unsaturated Compositions – B Series

| Coating Composition | 0B | 3B | 4B | 7B |
|---|---|---|---|---|
| Formulation Appearance | Clear | Clear | Clear | Clear |
| Formulation Viscosity mPa.s (cps) @ 25°C | 500 | 510 | 500 | 450 |
| Coating Properties | | | | |
| Appearance | Clear High Gloss | Clear High Gloss | Clear High Gloss | Clear High Gloss |
| Tack free time (min.) | 200/220 | 100/135 | 115/150 | 265/290 |
| Thickness range (mm) | 0.03–0.05 | 0.03–0.05 | 0.03–0.05 | 0.03–0.05 |
| Hardness @ 0.04 mm | | | | |
| after 1 day | <6B | <6B | <6B | <6B |
| after 4 days | 4B– | 4B | 4B+ | 4B– |
| after 21 days | 4B+ | 2B+ | 2B+ | 3B |
| MEK Resistance (rubs) after 4 days | 11 | 13 | 12 | 10 |
| after 21 days | 12 | 23 | 23 | 21 |
| Conical Mandrel (1st crack) | 180° | 20° | 40° | 100° |
| Clev. Cond. Humidity (21 days/10 days) | White; B. & PH. R. over 20% | White; B. & PH. R. over 35% | White; B. & PH. R. over 15% | White; B. & PH. R. over 40% |

*Air-drying Unsaturated Coating Compositions — C Series*

Air drying compositions of 48 percent solids and designated 1C, 3C, 5C and 10C are prepared from a solution of an unsaturated short soya oil-modified resin sold by Spencer Kellogg under the tradename Aroplaz® 3252-X-50 and the unsaturated melamine condensates of examples 1, 3, 4, 5 and 10. The weight ratio of unsaturated oil-modified resin to unsaturated melamine condensate is 4:1. A mixed drier containing cobalt, calcium and zirconium salts of fatty acids is added to provide a concentration of 0.04 percent cobalt, 0.2 percent calcium and 0.15 percent zirconium based on the total solids. The solvent consists of 92 weight percent xylene and 8 weight percent methyl ethyl ketone. The compositions are coated on phosphate treated panels and allowed to dry at room temperature. The coatings are evaluated in comparison with a coating prepared from the unsaturated oil-modified resin alone (example 0C). The data are set forth in Table 4. The data show that the unsaturated melamine condensates allowed a substantial decrease in viscosity of the coating composition and increased the rate of hardness development, hardness and solvent resistance without adverse effect on the extremely fast tack-free time.

TABLE 4

Evaluation of Air-Drying Unsaturated Compositions – C Series

| Coating Composition | 0C | 1C | 3C | 4C | 5C | 10C |
|---|---|---|---|---|---|---|
| Formulation Properties | | | | | | |
| Appearance | ALL FORMULATIONS ARE LIGHT AMBER AND CLEAR | | | | | |
| Viscosity (25°C), initial (mPa.s) | 575 | 290 | 440 | 320 | 300 | 285 |
| Viscosity (25°C), after 1 week @ 120°F (mPa.s) | 850 | 440 | 800 | 480 | 460 | 445 |
| Coating Properties | | | | | | |
| Thickness range (mm) | 0.03–0.05 | 0.03–0.05 | 0.03–0.05 | 0.03–0.05 | 0.03–0.05 | 0.03–0.05 |
| Tack free time (min.) | 15/19 | 13/18 | 11/15 | 16/19 | 17/21 | 18/22 |
| Hardness | | | | | | |
| after 1 day | <6B | <6B | <6B | <6B | <6B | <6B |
| after 4 days | 4B | 2B | 2B | 3B+ | 2B | 3B |
| after 21 days | 2B+ | B+ | B+ | B+ | B+ | B+ |
| MEK Resist. (rubs) | | | | | | |
| after 4 days | 10 | 14 | 14 | 14 | 14 | 14 |
| after 21 days | 36 | 45 | 45 | 60 | 45 | 42 |
| Conical Mandrel (after 21 days) | 7° | 6° | 6° | 7° | 8° | 10° |
| Forward Impact, Joules (after 21 days) | 1.8 | 1.7 | 1.4 | 1.6 | 1.8 | 1.6 |
| Clev. Cond. Humidity 15 day exposure (after 21 days) | White; dense PH.B., PH.R. over 1% | White; dense PH.B., 0%R. | White; dense PH.B., 0%R. | White; dense PH.B., 0%R. | White; dense PH.B., 0%R. | White; dense PH.B., 0%R. |

*Air-drying Unsaturated Coating Compositions — D Series*

Air-drying compositions of 48 percent solids and designated 1D, 3D, 5D, 10D and 11D are prepared from a solution of an unsaturated medium soya oil-modified resin sold by Spencer-Kellogg under the tradename Aroplaz® 1082—M—50 and the unsaturated melamine condensates of examples 1, 3, 5, 10 and 11. The weight ratio of unsaturated oil-modified resin to unsaturated melamine condensate is 4:1. A mixed drier containing cobalt, calcium and zirconium salts of fatty acids is added to provide a concentration of 0.05 percent cobalt, 0.17 percent calcium and 0.11 percent zirconium based on the total solids. The solvent consists of 74 weight percent mineral spirits, 18 weight percent xylene and 8 weight percent methyl ethyl ketone. The compositions are coated on phosphate treated steel panels and allowed to dry at room temperature. The coatings are evaluated in comparison with a coating containing Aroplaz 1082—M—50 resin alone (example 0D). The data are set forth in Table 5. The data show that the unsaturated melamine condensates generally reduce the viscosity of the coating composition and increase the rate of hardness development, the hardness, the solvent resistance of the coatings and humidity resistance of the coatings without much effect on the tack-free time.

TABLE 5

Evaluation of Air-Drying Unsaturated Compositions – D Series

| Coating Compositions | 0D | 1D | 3D | 5D | 10D | 11D |
|---|---|---|---|---|---|---|
| Formulation Properties | | | | | | |
| Appearance | ALL FORMULATIONS ARE LIGHT AMBER AND CLEAR | | | | | |
| Visc. (25°C), initial (mPa.s) | 460 | 210 | 460 | 150 | 150 | 370 |
| Visc. (25°C), after 1 week @ 120°F (mPa.s) | 550 | 240 | 590 | 160 | 200 | 575 |
| Coating Properties | | | | | | |
| Thickness range (mm) | 0.03–0.05 | 0.03–0.05 | 0.03–0.05 | 0.03–0.05 | 0.03–0.05 | 0.03–0.05 |
| Tack free time[2] (min.) | 180/220 | 180/220 | 310/340 | 225/240 | 210/225 | 210/225 |
| Hardness @ 0.03 mm | | | | | | |
| after 1 day | <6B | <6B | <6B | <6B | <6B | <6B |
| after 3 days | <6B | <2B | 5B | 2B– | 3B | 3B |
| after 21 days | 2B–3B | B | B | B | B | B |
| MEK Resistance (rubs) | | | | | | |
| after 10 days | 45 | 65 | 85 | 85 | 90 | 85 |
| after 21 days | 50 | 150 | 150 | 175 | 150 | 155 |
| Conical Mandrel[3] (21 d) | >180° | >180° | >180° | >180° | >180° | >180° |
| Clev. Cond. Humidity[4] (12 days) | | | | | | |
| 3 day exposure | Dense #10B. R. over 80% | Few #10B. PH.R over 50% | Few #10B. PH.R. over 60% | Few #10B. PH.R. over 40% | Few #10B. PH.R. over 25% | Dense PH.B. PH.R. over 15% |

*Air-drying Unsaturated Coating Compositions — E Series*

An unsaturated ester of a styrene allyl alcohol copolymer is prepared by esterifying a styrene allyl alcohol copolymer of average molecular weight 1600 containing 5.3 moles hydroxyl per molecule, sold by Monsanto Company under the registered trademark RJ—100, with a mixture of 1.9 moles castor fatty acids and 2.0 moles linseed fatty acids per mole of styrene allyl alcohol copolymer.

Air-drying coating compositions of 80 percent solids are prepared by blending the unsaturated ester with the unsaturated melamine condensates of examples 3 and 5. Weight ratios of unsaturated ester to unsaturated melamine condensate are 4:1 to 3:2. Fatty acid salts and fatty acid salts combined with t-butylhydroperoxide are used as cure catalysts. The unsaturated melamine condensates decrease the tack-free time of the unsaturated ester substantially especially when they are present as 40 percent of the resin solids and the system is cured with fatty acid salt and hydroperoxide, and improve the coating hardness, solvent resistance and flexibility.

Example 17

A coating formulation containing the unsaturated medium soya oil-modified resin of the D-series and the unsaturated melamine condensate of Example 2 in the weight ratio of 60 to 40 is prepared as a 48 percent solids solution in a solvent consisting of 91 weight percent xylene and 9 weight percent methyl ethyl ketone. A mixed cobalt, calcium and zirconium drier is added. The coating formulation is applied to phosphate treated steel panels and dried in air. The hardness of the coating increases from <6B to B in 21 days. The methyl ethyl ketone rub test value is 90 after 10 days and 125 after 21 days.

Example 18

A coating formulation containing the oil-modified unsaturated resin of Example 1A and the unsaturated melamine condensate of Example 4 in the weight ratio of 60 to 40 is prepared as a 70 percent solids solution in a solvent consisting of 60 weight percent xylene and 40 weight percent methyl ethyl ketone. A mixed cobalt zirconium drier is added. The coating formulation is applied to phosphate treated steel panels and dried in air. The hardness of the coating increases from 6B to HB in 21 days. The methyl ethyl ketone rub test value is 80 after 10 days and 140 after 21 days.

Example 19

A coating formulation containing the oil-modified unsaturated resin of Example 1A and the unsaturated melamine condensate of Example 3 in the weight ratio of 90 to 10 is prepared as a 70 percent solids solution in a solvent consisting of 90 weight percent xylene and 10 weight percent methyl ethyl ketone. A mixed cobalt lithium drier is added. The coating formulation is applied to phosphate treated steel panels and dried in air. The hardness of the coating increases from 5B to HB in 21 days. The methyl ethyl ketone rub test value is 75 after 10 days and 130 after 21 days.

Example 20

A coating formulation containing the oil-modified unsaturated resin of Example 1A and the unsaturated melamine condensate of Example 9 in the weight ratio of 70 to 30 is prepared as a 70 percent solids solution in a solvent consisting of 70 weight percent xylene and 30 weight percent methyl ethyl ketone. A mixed cobalt manganese drier is added. The coating formulation is applied to phosphate treated steel panels and dried in air. The hardness of the coating increases from <6B to 2B in 21 days. The methyl ethyl ketone rub test value is 60 after 10 days and 90 after 21 days.

Example 21

A coating formulation containing the oil-modified unsaturated resin of Example 1A and the unsaturated melamine condensate of Example 9 in the weight ratio of 70 to 30 is prepared as a 70 percent solids solution in a solvent consisting of 70 weight percent xylene and 30 weight percent methyl ethyl ketone. A mixed cobalt zirconium drier is added. The coating formulation is applied to phosphate treated steel panels and dried in air. The hardness of the coating increases from 6B to HB in 21 days. The methyl ethyl ketone rub test value is 100 after 10 days and 140 after 21 days.

**Claims**

1. An unsaturated condensate of a methylolmelamine, an acrylamide, an ethylenically unsaturated fatty acid amide and optionally a $C_1$ to $C_{10}$ alcohol wherein the methylolmelamine has at least 5 methylol groups per melamine ring, wherein substantially all the methylol groups are condensed with the acrylamide, the unsaturated fatty acid amide or the alcohol, wherein the number of the acrylamide moeties of the condensate is in the range of 1 to 4 per melamine ring and the number of unsaturated fatty acid amide moieties is in the range of 0.5 to 2 per melamine ring, wherein the ratio of the acrylamide moieties to unsaturated fatty acid amide moieties is in the range of 1:1 to 3:1 and wherein the unsaturated fatty acid amide is an amide of ammonia or methylamine and an ethylenically unsaturated fatty acid containing from 4 to 32 carbon atoms and at least one allylic hydrogen atom per fatty acid moiety.

2. An unsaturated condensate of Claim 1 wherein the acrylamide is represented by the formula:

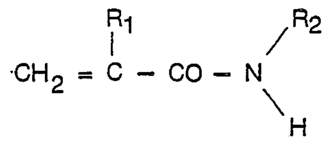

wherein $R_1$ and $R_2$ are hydrogen or methyl.

3. An unsaturated condensate of Claim 2, wherein $R_1$ and $R_2$ are hydrogen.

4. An unsaturated condensate of either Claim 2 or Claim 3, wherein the unsaturated fatty acid contains from ten to twenty carbon atoms.

5. An unsaturated condensate of any of Claims 2, 3 and 4, wherein the unsaturated fatty acid comprises at least about 5 weight percent of polyunsaturated acid.

6. An unsaturated condensate of Claim 5, comprising alcohol moieties derived from a $C_1$ to $C_4$ alcohol.

7. An unsaturated condensate of Claim 6, wherein the alcohol is methyl alcohol.

8. An unsaturated condensate of a methylolmelamine, acrylamide, an ethylenically unsaturated fatty acid amide and a $C_1$ to $C_4$ alcohol, wherein the methylolmelamine has at least 5 methylol groups per melamine ring, wherein substantially all the methylol groups are condensed with acrylamide, the unsaturated fatty acid amide or the alcohol, wherein the number of acrylamide moieties of the condensate is in the range of 1 to 3 per melamine ring, and the number of unsaturated fatty acid amide moieties is in the range of 0.75 to 1.5 per melamine ring, wherein the ratio of acrylamide moieties to unsaturated fatty acid amide moieties is in the range of 1:1 to 3:1, and wherein the amide is a primary amide of an ethylenically unsaturated fatty acid containing from 10 to 20 carbon atoms and at least one allylic hydrogen atom per fatty acid moiety.

9. An unsaturated condensate of Claim 8, wherein the unsaturated fatty acid comprises at least 5 weight percent of a polyunsaturated acid.

10. An unsaturated condensate of Claim 8, wherein the unsaturated fatty acid comprises at least 10 weight percent of a polyunsaturated acid.

11. An unsaturated condensate of any of Claims 8 to 10, wherein the alcohol is methyl alcohol.

12. An unsaturated condensate of any of Claims 8 to 11, wherein the unsaturated fatty acid is selected from the group consisting of oleic, linoleic and linolenic acids.

13. A process for the preparation of an unsaturated condensate which comprises condensing an alkoxymethylmelamine with an acrylamide and an ethylenically unsaturated fatty acid amide under acid conditions and in the presence of an oxidation and polymerization inhibiting quantity of an inhibitor until an amount of alcohol equivalent to the acrylamide and the unsaturated fatty acid amide is evolved, wherein the alkoxymethylmelamine has a combined ratio of formaldehyde to melamine in the range of 5:1 to 6:1 and a combined ratio of alcohol to melamine in the range of 4.7 to 6.0 moles per mole of melamine, wherein the mole ratio of the acrylamide to the alkoxymethylmelamine is in the range of 1:1 to 4:1, wherein the mole ratio of the unsaturated fatty acid amide to the alkoxymethylmelamine is in the range of 0.5:1 to 2:1, wherein the mole ratio of the acrylamide to the unsaturated fatty acid amide is in the range of 1:1 to 3:1 and wherein the unsaturated fatty acid amide is an amide of ammonia or methylamine and an unsaturated fatty acid containing from 4 to 32 carbon atoms and at least one allylic hydrogen atom per fatty acid moiety.

14. A process of Claim 13, wherein the mole ratio of the acrylamide to the alkoxymethylmelamine is in the range of 1:1 to 3:1 and the mole ratio of the unsaturated fatty acid amide to the alkoxymethylmelamine is in the range of 0.75 to 1.5.

15. A process of either Claim 13 or Claim 14, wherein the unsaturated fatty acid contains at least 5 weight percent of a polyunsaturated fatty acid.

16. A process of Claim 15, wherein the unsaturated fatty acid contains at least 10 weight percent of a polyunsaturated fatty acid.

17. A process of any of Claims 13 to 16, wherein the unsaturated fatty acid contains from 10 to 20 carbon atoms per molecule.

18. A process of any of Claims 13 to 17, wherein the alkoxymethyl melamine is a methoxymethylmelamine.

19. A coating composition comprising from 50 to 95 parts by weight of an unsaturated oil-modified resin and from 50 to 5 parts by weight of an unsaturated melamine condensate of Claim 1.

20. An air-drying composition comprising from 70 to 90 parts by weight of an unsaturated oil-modified resin and from 30 to 10 parts by weight of an unsaturated melamine condensate of Claim 8.

21. A coating composition of either Claim 19 or Claim 20, wherein the unsaturated oil-modified resin is selected from oil-modified alkyd resins, oil-modified styrene allyl alcohol copolymers, oil-modified acrylic resins and oil-modified epoxy resins of molecular weight up to 10,000 and glass transition temperature in the range of 0 to 100°C, having an oil length in the range of 15 to 50%.

22. A coating composition of any of Claims 18 to 21, wherein the molecular weight of the unsaturated oil-modified resin is in the range of 500 to 8000 and the glass transition temperature is in the range of 20 to 60°C.

23. A coating composition of any of Claims 19 to 22, wherein the unsaturated oil-modified resin is an oil modified alkyd.

24. An article coated with a coating composition of any of Claims 19 to 23.

**Revendications**

1. Condensé insaturé d'une méthylolmélamine, d'une acrylamide, d'une amide d'acide gras à insaturation éthylénique et de manière facultative d'un alcool en $C_1$ à $C_{10}$ où la méthylolmélamine a au moins 5 groupes méthylols par noyau de mélamine, où sensiblement tous les groupes méthylols sont condensés avec l'acrylamide, l'amide d'acide gras insaturé ou l'alcool, où le nombre de parties d'acrylamide du condensé est dans la gamme de 1 à 4 par noyau de mélamine et le nombre de parties d'amide d'acide gras insaturé est dans la gamme de 0,5 à 2 par noyau de mélamine, où le rapport parties acrylamides/parties d'amide d'acide gras insaturé est dans la gamme de 1:1 à 3:1 et où l'amide d'acide gras insaturé est une amide d'ammoniac ou de méthylamine et d'un acide gras à insaturation éthylénique contenant 4 à 32 atomes de carbone et au moins un atome d'hydrogène allylique par partie d'acide gras.

2. Condensé insaturé selon la revendication 1, dans lequel l'acrylamide est représentée par la formule:

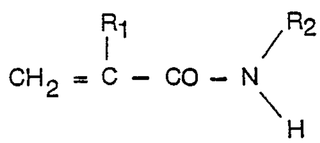

où $R_1$ et $R_2$ sont l'hydrogène ou le groupe méthyle.

3. Condensé insaturé selon la revendication 2, dans lequel $R_1$ et $R_2$ sont l'hydrogène.

4. Condensé insaturé selon l'une des revendications 2 ou 3, dans lequel l'acide gras insaturé contient 10 à 20 atomes de carbone.

5. Condensé insaturé selon l'une quelconque des revendications 2, 3 et 4, dans lequel l'acide gras insaturé comprend au moins 5% en poids d'acide polyinsaturé.

6. Condensé insaturé selon la revendication 5, comprenant des parties alcool provenant d'un alcool en $C_1$ à $C_4$.

7. Condensé insaturé selon la revendication 6 dans lequel l'alcool est l'alcool méthylique.

8. Condensé insaturé d'une méthylolmélamine, d'acrylamide, d'une amide d'acide gras à insaturation éthylénique et d'un alcool en $C_1$ à $C_4$, où la méthylolmélamine a au moins 5 groupes méthylols par noyau de mélamine, où sensiblement tous les groupes méthylols sont condensés avec l'acrylamide, l'amide d'acide gras insaturé ou l'alcool, où le nombre de parties acrylamides du condensé est dans la gamme de 1 à 3 par noyau de mélamine, et le nombre de parties d'amide d'acide gras insaturé est dans la gamme de 0,75 à 1,5 par noyau de mélamine, où le rapport parties acrylamides/parties d'amide d'acide gras insaturé est dans la gamme de 1:1 à 3:1, et où l'amide est une amide primaire d'un acide gras à insaturation éthylénique contenant 10 à 20 atomes de carbone et au moins un atome d'hydrogène allylique par partie d'acide gras.

9. Condensé insaturé selon la revendication 8, dans lequel l'acide gras insaturé comprend au moins 5% en poids d'un acide polyinsaturé.

10. Condensé insaturé selon la revendication 8, dans lequel l'acide gras insaturé comprend au moins 10% en poids d'un acide polyinsaturé.

11. Condensé insaturé selon l'une quelconque des revendications 8 à 10, dans lequel l'alcool est l'alcool méthylique.

12. Condensé insaturé selon l'une quelconque des revendications 8 à 11, dans lequel l'acide gras insaturé est choisi dans le groupe se composant d'acides oléique, linoléique et linolénique.

13. Procédé pour la préparation d'un condensé insaturé qui consiste à condenser une alcoxyméthylmélamine avec une acrylamide et une amide d'acide gras à insaturation éthylénique dans des conditions acides et en présence d'une quantité, inhibitrice d'oxydation et de polymérisation, d'un inhibiteur, jusqu'à ce qu'il se dégage une quantité d'alcool équivalant à l'acrylamide et à l'amide d'acide gras insaturé, où l'alcoxyméthylmélamine a un rapport combiné formaldéhyde/mélamine dans la gamme de 5:1 à 6:1 et un rapport combiné alcool/mélamine dans la gamme de 4,7 à 6,0 moles par mole de mélamine, où le rapport en mole acrylamide/alcoxyméthylmélamine dans la gamme de 1:1 à 4:1, où le rapport en mole amide d'acide gras insaturé/alcoxyméthylmélamine est dans la gamme de 0,5:1 à 2:1, où le rapport en mole acrylamide/amide d'acide gras insaturé est dans la gamme de 1:1 à

3:1 et où l'amide d'acide gras insaturé est une amide d'ammoniac ou de méthylamine et d'un acide gras insaturé contenant 4 à 32 atomes de carbone et au moins un atome d'hydrogène allylique par partie d'acide gras.

14. Procédé selon la revendication 13, dans lequel le rapport molaire acrylamide/alcoxyméthylmélamine est dans la gamme de 1:1 à 3:1 et le rapport molaire amide d'acide gras insaturé/alcoxyméthylmélamine est dans la gamme de 0,75 à 1,5.

15. Procédé selon la revendication 13 ou la revendication 14, dans lequel l'acide gras insaturé contient au moins 5% en poids d'un acide gras polyinsaturé.

16. Procédé selon la revendication 15, dans lequel l'acide gras insaturé contient au moins 10% en poids d'un acide polyinsaturé.

17. Procédé selon l'une quelconque des revendications 13 à 16, dans lequel l'acide gras insaturé contient 10 à 20 atomes de carbone par molécule.

18. Procédé selon l'une quelconque des revendications 13 à 17, dans lequel l'alcoxyméthylmélamine est une méthoxyméthylmélamine.

19. Composition de revêtement comprenant 50 à 95 parties en poids d'une résine insaturée modifiée par une huile et 50 à 5 parties en poids d'un condensé de mélamine insaturé de la revendication 1.

20. Composition séchant dans l'air comprenant 70 à 90 parties en poids d'une résine insaturée modifiée par une huile et 30 à 10 parties en poids d'un condensé de mélamine insaturé de la revendication 8.

21. Composition de revêtement selon la revendication 19 ou la revendication 20, dans laquelle la résine insaturée modifiée par une huile est choisie parmi des résines alkydes modifiées par une huile, des copolymères styrène/alcool allylique modifiés par une huile, des résines acryliques modifiées par une huile et des résines époxy modifiées par une huile à poids moléculaire allant jusqu'à 10 000 et à température de transition à l'état vitreux dans l'intervalle de 0 à 100°C, ayant une longueur d'huile dans la gamme de 15 à 50%.

22. Composition de revêtemenet selon l'une quelconque des revendications 18 à 21, dans laquelle le poids moléculaire de la résine insaturée modifiée par une huile est dans la gamme de 500 à 800 et la température de transition à l'état vitreux est dans la gamme de 20 à 60°C.

23. Composition de revêtement selon l'une quelconque des revendications 19 à 22, dans laquelle la résine insaturée modifiée par une huile est un produit alkyde modifié par une huile.

24. Article revêtu par une composition de revêtement de l'une quelconque des revendications 19 à 23.

## Patentansprüche

1. Ungesättigtes Kondensat eines Methylolmelamins, eines Acrylamids, eines ethylenisch ungesättigten Fettsäureamids und gegebenenfalls eines $C_1$- bis $C_{10}$-Alkohols, worin das Methylolmelamin mindestens 5 Methylolgruppen pro Melaminring aufweist, worin im wesentlichen alle Methylolgruppen mit dem Acrylamid, dem ungesättigten Fettsäureamid oder dem Alkohol kondensiert sind, worin die Anzahl der Acrylamideheiten des Kondensats im Bereich von 1 bis 4 pro Melaminring liegt und die Anzahl der ungesättigten Fettsäureamideinheiten im Bereich von 0,5 bis 2 pro Melaminring liegt, worin das Verhältnis der Acrylamideinheiten zu ungesättigten Fettsäureamideinheiten im Bereich von 1:1 bis 3:1 liegt und worin das ungesättigte Fettsäureamid ein Amid von Ammoniak oder Methylamin und einer ethylenisch ungesättigten Fettsäure mit 4 bis 32 Kohlenstoffatomen und mindestens einem Allyl-Wasserstoffatom pro Fettsäureeinheit ist.

2. Ungesättigtes Kondensat nach Anspruch 1, worin das Acrylamid durch die Formel

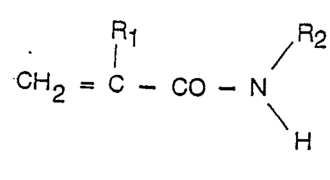

angegeben ist, worin $R_1$ und $R_2$ Wasserstoff oder Methyl sind.

3. Ungesättigtes Kondensat nach Anspruch 2, worin $R_1$ und $R_2$ Wasserstoff sind.

4. Ungesättigtes Kondensat nach Anspruch 2 oder Anspruch 3, worin die ungesättigte Fettsäure 10 bis 20 Kohlenstoffatome enthält.

5. Ungesättigtes Kondensat nach einem der Ansprüche 2, 3 und 4, worin ungesättigte Fettsäure mindestens etwa 5 Gew.-% polyungesättigte Säure enthält.

6. Ungesättigtes Kondensat nach Anspruch 5, welches Alkoholeinheiten enthält, die von einem $C_1$- bis $C_4$-Alkohol abgeleitet sind.

7. Ungesättigtes Kondensat nach Anspruch 6, worin der Alkohol Methylalkohol ist.

8. Ungesättigtes Kondensat eines Methylolmelamins, Acrylamids, eines ethylenisch ungesättigten Fettsäureamids und eines $C_1$- bis $C_4$-Alkohols, worin das Methylolmelamin mindestens 5 Methylolgruppen pro Melaminring aufweist, worin im wesentlichen alle Methylolgruppen mit dem Acrylamid, dem ungesättigten Fettsäureamid oder dem Alkohol kondensiert sind, worin die Anzahl der Acrylamideinheiten des Kondensats im Bereich von 1 bis 3 pro Melaminring liegt, und die Anzahl der ungesättigten Fettsäureamideinheiten im Bereich von 0,75 bis 1,5 pro Melaminring liegt, worin das Verhältnis der Acrylamideinheiten zu ungesättigten Fettsäureamideinheiten im Bereich von 1:1 bis 3:1 liegt, und worin das Amid ein primäres Amid einer ethylenisch ungesättigten Fettsäure mit 10 bis 20 Kohlenstoffatomen und mindestens einem Allyl-Wasserstoffatom pro Fettsäureeinheit ist.

9. Ungesättigtes Kondensat nach Anspruch 8, worin die ungesättigte Fettsäure mindestens 5 Gew.-% einer polyungesättigten Säure enthält.

10. Ungesättigtes Kondensat nach Anspruch 8, worin die ungesättigte Fettsäure mindestens 10 Gew.-% einer polyungesättigten Säure enthält.

11. Ungesättigtes Kondensat nach einem der Ansprüche 8 bis 10, worin der Alkohol Methylalkohol ist.

12. Ungesättigtes Kondensat nach einem der Ansprüche 8 bis 11, worin die ungesättigte Fettsäure aus der Gruppe von Ölsäure, Linolsäure und Linolensäure ausgewählt ist.

13. Verfahren zur Herstellung eines ungesättigten Kondensats, wobei ein Alkoxymethylmelamin mit einem Acrylamid und einem ethylenisch ungesättigten Fettsäureamid unter saueren Bedingungen und in Gegenwart einer eine Oxidation und Polymerisation inhibierenden Menge eines Inhibitors kondensiert wird, bis eine Alkoholmenge, die zum Acrylamid und zum ungesättigten Fettsäureamid äquivalent ist, entwickelt worden ist, worin das Alkoxymethylmelamin ein kombiniertes Verhältnis von Formaldehyd zu Melamin im Bereich von 5:1 bis 6:1 aufweist und ein kombiniertes Verhältnis von Alkohol zu Melamin im Bereich von 4,7 bis 6,0 Mol pro Mol Melamin, worin das Molverhältnis des Acrylamids zu dem Alkoxymethylmelamin im Bereich von 1:1 bis 4:1 liegt, worin das Molverhältnis des ungesättigten Fettsäureamids zu dem Alkoxymethylmelamin im Bereich von 0,5:1 bis 2:1 liegt, worin das Molverhältnis des Acrylamids zu dem ungesättigten Fettsäureamid im Bereich von 1:1 bis 3:1 liegt, und worin das ungesättigte Fettsäureamid ein Amid von Ammoniak oder Methylamin und einer ungesättigten Fettsäure mit 4 bis 32 Kohlenstoffatomen und mindestens einem Allyl-Wasserstoffatom pro Fettsäureeinheit ist.

14. Verfahren nach Anspruch 13, worin das Molverhältnis des Acrylamids zu dem Alkoxymethylmelamin im Bereich von 1:1 bis 3:1 liegt und das Molverhältnis des ungesättigten Fettsäureamids zu dem Alkoxymethylmelamin im Bereich von 0,75 bis 1,5 liegt.

15. Verfahren nach Anspruch 13 oder Anspruch 14, worin die ungesättigte Fettsäure mindestens 5 Gew.-% einer polyungesättigten Säure enthält.

16. Verfahren nach Anspruch 15, worin die ungesättigte Fettsäure mindestens 10 Gew.-% einer polyungesättigten Fettsäure enthält.

17. Verfahren nach einem der Ansprüche 13 bis 16, worin die ungesättigte Fettsäure 10 bis 20 Kohlenstoffatome pro Molekül enthält.

18. Verfahren nach einem der Ansprüche 13 bis 17, worin das Alkoxymethylmelamin ein Methoxymethylmelamin ist.

19. Beschichtungs-Zusammensetzung, die 50 bis 95 Gew.-Teile eines ungesättigten, ölmodifizierten Harzes und 50 bis 5 Gew.-Teile eines ungesättigten Melaminkondensats nach Anspruch 1 enthält.

20. Lufttrocknende Zusammensetzung, die 70 bis 90 Gew.-Teile eines ungesättigten, ölmodifizierten Harzes und 30 bis 10 Gew.-Teile eines ungesättigten Melaminkondensats nach Anspruch 8 enthält.

21. Beschichtungs-Zusammensetzung nach Anspruch 19 oder Anspruch 20, worin des ungesättigte, ölmodifizierte Harz unter ölmodifizierten Alkydharzen, ölmodifizierten Styrol-Allylalkoholcopolymeren, ölmodifizierten Acrylharzen und ölmodifizierten Epoxyharzen mit einem Molekulargewicht bis zu 10 000 und einer Glasübergangstemperatur im Bereich von 0 bis 100°C mit einem Ölgehalt im Bereich von 15 bis 50% ausgewählt ist.

22. Beschichtungs-Zusammensetzung nach einem der Ansprüche 18 bis 21, worin das Molekulargewicht des ungesättigten, ölmodifizierten Harzes im Bereich von 500 bis 8000 liegt und die Glasübergangstemperatur im Bereich von 20 bis 60°C liegt.

23. Beschichtungs-Zusammensetzung nach einem der Ansprüche 19 bis 22, worin das ungesättigte, ölmodifizierte Harz ein ölmodifiziertes Alkyd ist.

24. Gegenstand, beschichtet mit einer Beschichtungs-Zusammensetzung nach einem der Ansprüche 19 bis 23.